# EUROPEAN PATENT SPECIFICATION

(11) **EP 0 424 430 B1**
(45) Date of publication and mention of the grant of the patent: **03.03.1993**
(21) Application number: 89907843.0
(22) Date of filing: 07.07.1989
(51) Int. Cl.: B65G 25/04, B65G 35/06, B23Q 7/14

(54) **A DEVICE FOR A RAPID POSITIONING OF A HEAVY CARRIAGE**
ANORDNUNG ZUM SCHNELLEN POSITIONIEREN VON SCHWEREN LASTEN
DISPOSITIF DE POSITIONNEMENT RAPIDE DE CHARIOTS LOURDS

(30) Priority: 08.07.1988 SE 8802598; 13.03.1989 SE 8900886
(43) Date of publication of application: 02.05.1991
(73) Proprietor: MYTRONIC AB, S-122 42 Enskede (SE)
(72) Inventor: STRIDSBERG, Lennart, S-122 42 Enskede (SE)
(74) Representative: Hopfgarten, Nils
(86) International application number: SE8900398
(87) International publication number: WO9000509

(56) References cited:
- CH-A- 663 171
- DE-B- 2 512 003

## Description

The present invention relates to a device for, very rapidly and with a very high precision (some tenth of micrometers), being able to position, relatively heavy carriages (several kilograms) along a relatively long path, (more than 1 m).

Such movements are required in all possible machining tools and robots. This requirement is naturally greater in machinery where a large number of operative steps, which each takes a short time, shall be performed for positions which are maintained very exactly. An example are picking robots, where a picking head is arranged to fetch various types of components from a large number of possible places and deliver these to a large number of different places with a high precision.

The conventional art for such displacements is a screw and a belt.

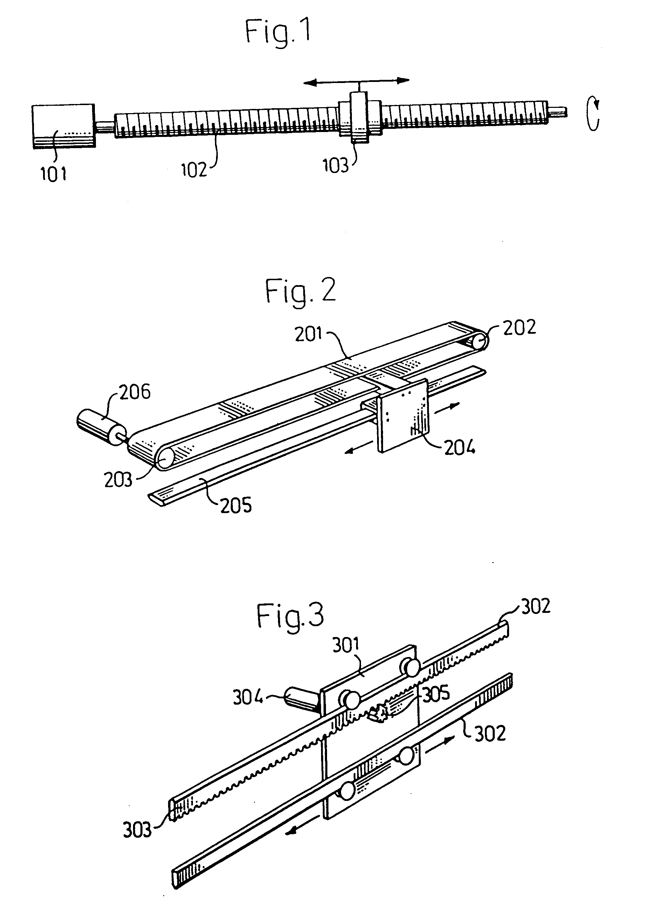

Screw driven systems (see Fig. 1) use a stationary motor 101, a rotatable but otherwise stationary (ball) screw 102, which is driven by said motor 101, and a (ball) nut 103, which when said screw is rotated runs along said (ball) screw. Screw driven systems have no large problems for low speeds and short displacements. For high speeds and long displacements there are three cooperating disadvantages:
1) The critical number of revolutions: Because said screw is only supported in its ends, it will be unstable, if the number of revolutions will exceed a certain value. This value can be increased if the diameter is increased.
2) The pitch: the greater displacement the nut will do along said screw for each revolution, the lower number of revolutions is required for a certain speed. The pitches are, because of practical reasons, at most equal to the diameter of the screw, whereby a large pitch will give a large diameter.
3) The moment of inertia: For large diameters and long screws the moment of inertia of the screw will be embarassing.

Belt driven systems (see Fig. 2) have a belt 201 in a closed loop about two rollers 202 and 203 and a carriage 204 running on a separate linear guide 205. The driving is accomplished through a motor 206.

Belt driven systems are limited by the elasticity of the belt. When the motor 206 produces a torque, the belt 201 will be extended, which will give an elasticity between the angle of said motor 206 and the position of the load/carriage 204.

Another problem of belt drives is friction/slip. If the belt is a toothed belt the biasing force required to reduce the elasticity because of loop formation will produce large friction; if the belt is a steel belt a slip may be produced between the belt and the rollers 202/203, which will produce an error between the angle of said motor 206 and the position of the load/carriage 204.

A possible method which however, as far as is known, seldom is used for the combination of a high speed and a high precision is a stationary gear rack and a motor located on the carriage according to Fig. 3. A carriage 301 runs along a linear guide 302 arranged in some way, in which there is a stationary gear rack 303. On said carriage 301 there is a motor 304 having a gear wheel 305. To move the carriage 301 the motor shaft is rotated, which through said gear wheel 305 will force a movement of said carriage 301. The elasticity may be made neglectable because the motor shaft and the gear wheel 305 are extremely more strong and shorter than said belt 201. The gear rack 303 can be attached to the frame of the apparatus (not drawn in order not to obscure the other elements) at very short distances. A slip may not occur. The moment of inertia is known and significantly much smaller than for large, long ball screws.

An apparent disadvantage in this method is that the mass of the driving motor is added to the mass of the carriage. If high accelerations and speeds are required the driving motor will form a dominating part of the mass of the carriage. This will increase the power requirement and will entail increased costs by a need for a stronger guiding path and a stronger frame. (The frame must be constructed in such a way that it is able to resist the acceleration forces without unacceptable vibrations.) Another problem in this method is that the play between a gear rack and a gear wheel mues be eliminated for the final positioning. This may be performed with double biased gear wheels. In order to operate with large torques required for a rapid positioning this will give high surface pressures and a rapid wear.

A device for the transport and positioning of work pieces is previously known from the embodiment shown in Fig. 6 and the associated part of the description in CH A 5 663 171. In this prior device carriages are displaced carrying work pieces on a path by means of exterior friction rollers. These friction rollers are rotatably mounted to the frame of said machinery. For the final and fine positioning of said carriages a gear rack segment is used placed on said carriage and an exterior gear wheel which is rotatably mounted to the frame of the machinery. The friction rollers and the gear wheels are motor driven. In such a system not very large running speeds or high positioning retardations can be achieved.

A device for the transport of goods is disclosed in DE-B2-25 12 003 where several conveyor unite are displaced vertically along a guide rail between different floors. The transport units have local motors mounted thereon which by their associated gear wheels cooperate with a gear rack attached to the guide rail. The vertical rails are terminated in separate rail sections which are horizontally displaceable by means of a motor mounted on these segments. This device is not intended for a rapid and precise transport of goods and thus will not solve the problems mentioned above.

The problems in the prior methods and devices described above are eliminated by the invention.

The invention is based on the idea of providing said carriage with a local motor which will follow the movable carriage and to combine this with other means to reduce or eliminate the drawbacks of local motors, primarily the mass of the local motor and the play which is produced when a local motor connects its power to the stationary frame by means of a gear rack or similar devices.

The local motor according to the invention may either be a linear electric motor having one part mounted on the carriage and another part mounted on the frame of the machinery, or a rotation motor having rotating elements mounted on the carriage, which cooperate with a stationary positioning bar. The positioning bar may in the longitudinal direction have periodical recesses and/or elevated portions and the cooperating rotating element will then have a corresponding design. In certain cases a smooth bar may be used with cooperating, strongly pressed rollers, which are attached to said carriage. In the preferred embodiment the positioning bar is a gear rack, e.g. identical to that of the system according to Fig. 3, alternatively a stationary ball screw with a rotating nut, which is mounted on the carriage. The gear rack with its associated gear wheels will offer the large rigidity which is valuable for the final positioning and the freedom of slip.

In the invention is used, however, besides the local motor, at least another means for giving the carriage 301 lateral forces. This means has two purposes:
To give large forces for acceleration and retardation.

To give a certain force for the final positioning in order to, by means of a bias, eliminate the play, which in the majority of the embodiments will be produced in the connection between a local rotation motor and the positioning bar. As an example can be mentioned the play between e.g. the gear wheel 305 and the bar 303.

The requirements of this extra means are thus much lower than in positioning systems generally. The elasticity for instance has no importance. The requirement of very short response times is much lower.

As examples of such means can be mentioned:
A band (alternatively a belt, a tooth belt, a chain or similar devices) (201), which is driven by a motor, which is attached to e.g. the frame of the machinery. It may be relatively elastic and thus light and may have a moderate bias and thus a moderate friction.

Another gear wheel such as 305 having another motor 304.

A pneumatic cylinder having a running seal and being attached to e.g. the machinery frame, for instance a so-called Origa-cylinder.

A pneumatic cylinder having a magnetic coupling through the cylinder wall of the forces between the piston and the carriage.

Thus the invention relates to a device for a rapid positioning of a heavy carriage. The carriage is finely positioned by means of a fixed stationary positioning bar, e.g. a part of an electric motor or a gear rack, and a cooperating motor attached to the carriage. For the case including a gear rack said motor is provided with gear wheels for engagement with the gear rack. The carriage is rapidly and roughly displaced by means of another means. This another means can be constituted by another gear wheel, which cooperates with a gear rack and is driven by a separate motor, which is also mounted on the carriage. This further means will also give a certain force for the final positioning in such a way that the play between the gear wheel and the gear rack is eliminated by means of biasing. Instead of a second gear wheel a toothed belt, a pneumatical or another linear motor may be used. In these cases these are located separately from the carriage and and principally fixed in space. Also combinations of two gear wheels and a further exterior means is a possible embodiment.

For the case including two separate motors these are controlled by a control device which is arranged in such a way that the desired operation is obtained. Thus the motors, for a rapid displacement of the carriage, are driven in such a way that both motors will cooperate in the displacement, i.e. in such a way that both motors act on the carriage with forces which during the large part of this step are directed in the same direction. In this rapid movement the power required for the transport is thus mainly delivered by the second motor acting on the further means. In the positioning of the carriage the motors are instead driven in such a way that they, during the large part of this step, counteract each other. In this way possible plays may be eliminated.

For the case including two separate motors mounted on the carriage and a second exterior driving element driven by its own separate motor, these motors are controlled by a control device which is designed in such a way that the suitable operation is obtained. Thus all motors are driven, for a rapid displacement of the carriage, in such a way that they all during the large part of this step cooperate for the displacement, i.e. in such a way that all motors act on the carriage with forces being directed in the same direction. In the rapid movement the power required is delivered mainly by the motor acting on the exterior transport means. In the positioning of the carriage the motors are instead driven in such a way that the further means will be essentially inactive while the motors which are placed on the movable carriage instead, during a large part of this step, counteract each other. In this way the possible play will be eliminated.

The positioning bar may not be a whole bar being arranged along the total path of the carriage. Only suitable segments of this may be arranged in the case that the rapid displacement is being performed by an exterior means which is not placed on the carriage.

The invention will now be described with reference to the accompanying drawings, on which
Fig. 1 shows a prior system having a ball screw for positioning of work pieces,
Fig. 2 shows a prior belt driven system for positioning,
Fig. 3 shows a prior system having gear wheels and gear rack for the positioning,
Fig. 4 schematically shows an embodiment of the invention for the rapid displacement and the fine positioning of a carriage,
Fig. 5 schematically shows how the play can be compensated,
Fig. 6 shows another embodiment of the invention having an exterior belt driven means.

The figures 1, 2, and 3 have already been discussed above.

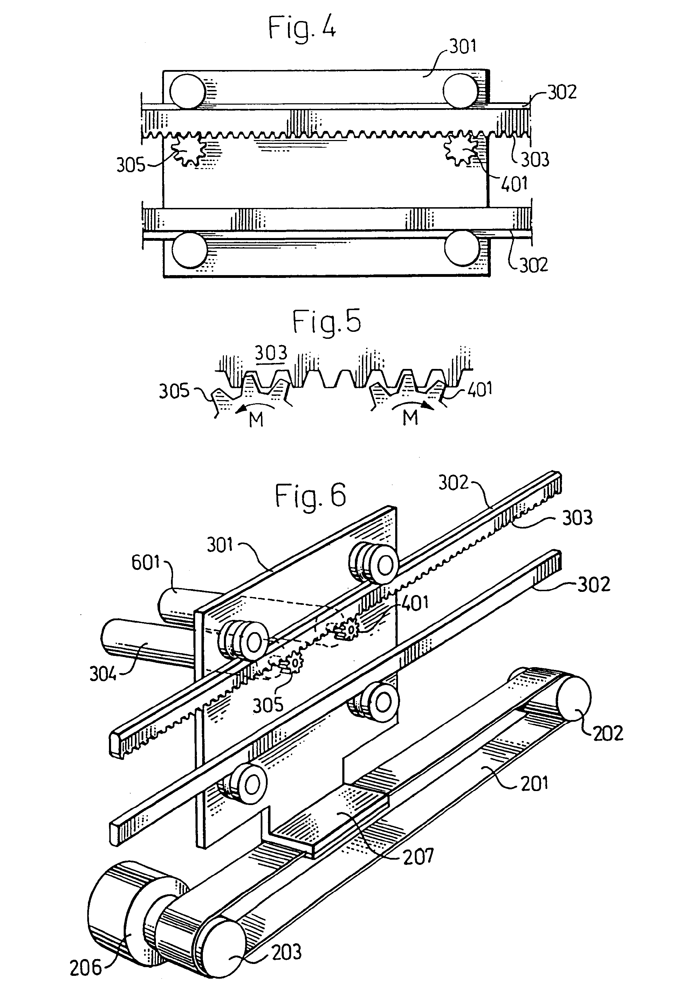

An embodiment of the invention can be seen in Fig. 4. According to the invention two gear wheels 305 and 401 are used, as is seen in Fig. 4. These two gear wheels can be given torques, which are at least partly independent of each other, for instance by the fact that they are driven by two independent motors. For a rapid positioning from one position to another first both motors will give a torque in the same direction in order to accelerate the carriage and then give a torque in the same but the opposite direction in order to brake the carriage. Up to now the gear play between the bar 303 and the gear wheels 305/401 has been unimportant.

When the carriage has arrived near its target all plays will entrain problems; therefore now both motors are given different torques in such a way that (according to Fig. 5) the gear play will disappear. When the carriage is almost still standing, the carriage can be maintained "locked" by the fact that the two wheels 401 and 402 are given smaller torques but in the opposite directions.

Fig. 6 shows another embodiment of the invention. The figure is totally schematical in order to show the elements principally. In this case an element 201 is used to give the carriage 301 extra forces laterally. The element 201 can be a band, a belt, a cable, a wire, a chain, a V-belt or similar devices. For the purpose that the operation will be more easily followed in the text it will in the following be called a "belt". By the fact that said belt 201 can be relatively elastic without making the controlling properties significantly worse it may be made relatively light.

The element (belt) 201 runs in a closed loop around the two rollers (alternatively pulleys/gear rings/toothed wheels) 202 and 203. The driving is produced by means of one or several motors 206 driving one or both of the wheels 202 and 203. The belt 201 is in some way attached to the carriage 301 by means of an element 207.

The carriage 301 has one or two local motors with a rigid connection between the carriage and the frame. In Fig. 6 the carriage 301 runs along a linear guide 302, in which there is a stationary gear rack 303. On the carriage 301 there is a motor 304 having a gear wheel 305 and possibly a further motor 601 with its associated gear wheel 401. In order to displace the carriage 301 the motor shaft is rotated, which through the gear wheel 305 will force a movement of the carriage 301. The elasticity between partly the carriage 301 and its motor 304 and partly the frame and its gear rack 303 is very small, because the gear rack can be attached to the machinery frame (not drawn in order not to obscure the remaining elements) at very short distances, and since the elasticity of the gear rack, the gear wheel and the motor shaft is small. A change of the torque delivered by the motor 304 will therefore produce a nearly immediate change of the force which, through the motor bearing, may be given to the carriage 301. In acceleration and braking large acceleration and braking forces are delivered by means of the belt 201. The motor 304 (and possibly also 601) are used during the braking step partly for correcting the transport of the carriage towards the final position. If for instance the braking because of friction and belt force will be too great, in certain short time intervals the local motor (S) will tend to accelerate the carriage in order to restore it to a correct run towards the target.

In those cases when the gear play is embarrassingly large and only one motor 304 is used, the motor 206 is given, after the target has been achieved, a weak torque in such a way that the gear play between 303 and 305 is eliminated. In many embodiments this will however take some extra time because of elasticities and inertia of the belt 201.

By the addition of a further motor 601 and the associated gear wheel 401 the correction of the run can be performed according to the same principles as are described with reference to the embodiment according to the figures 4 and 5. By this way a very high precision may be obtained immediately after the positioning.

## Claims

1. A device for a rapid positioning of a heavy carriage (301), which is guided along a longitudinal path (302), comprising
a stationary positioning bar (303), which is rigidly attached to a frame of the device,
a first motor (304) cooperating therewith,
a further means for the displacement of the heavy carriage, which is driven by a second motor (206; 601), in such a way that the forces to which the heavy carriage (301) is subjected when the first (304) and second motors (206; 601) are simultaneously activated can be directed in the same direction,
characterized in
that the first motor (304) is a local motor accompanying said heavy carriage (301),
that the second motor (206; 601) is a separate motor, and
that the device is arranged in such a way that the forces, to which the heavy carriage (301) is subjected, when the first (304) and second motors (206; 601) are simultaneously activated, can counteract each other.

2. A device according to claim 1, characterized in that the device is arranged in such a way
that the total force, to which the heavy carriage (301) is subjected, when both motors (301 and 206; 601) are activated, is composed of a first, comparatively small force and a second, larger force,
that the first force acts on the heavy carriage (301) through comparatively stiff mechanical elements (303, 305) in such a way that this force may change very rapidly, and
that the second force is derived from the second motor (206) and acts on the heavy carriage through comparatively weaker or more resilient mechanical elements (203, 201),
whereby the total force will have a considerable magnitude allowing a rapid displacement of the heavy carriage (301) and also will be able to change rapidly allowing a fine positioning of the heavy carriage (301).

3. A device according to claim 1 or 2, characterized in that the device is arranged in such a way,
that the heavy carriage (301) is rapidly and roughly displaced by the second motor (206), and
that the fine positioning of the heavy carriage (301) is performed by means of the first motor (304) together with a certain force obtained through the further displacement means from the second motor (206).

4. A device according to claim 1 or 2, characterized in that the device is arranged in such a way,
that the power and the large force required for the rapid displacement of the heavy carriage (301) is delivered mainly by the second motor (206), and
that the fine positioning of the heavy carriage (301) is performed by the first motor (304) in cooperation with the large force derived from the second motor (206).

5. A device according to one of claims 1 - 4, characterized in that said motors (304 and 206) are controlled by a control device which is arranged in such a way
that for a rapid displacement of the heavy carriage (301) the motors (304 and 206) are driven in such a way, that both motors during a large part of this step cooperate, i.e. that both motors (304 and 206) act on the heavy carriage with forces, which are directed in the same direction,
that the power required for the rapid positioning of the heavy carriage (301) is delivered mainly by the second motor (206), and
that for the positioning of the heavy carriage the motors (304 and 206) are driven in such a way that they during the large part of this step counteract each other, whereby possible play is eliminated.

6. A device according to one of claims 1 - 5, characterized in that the second motor also is a local motor (601) accompanying said heavy carriage (301).

7. A device according to one of claims 1 - 5, characterized in that the second motor (601) is rigidly mounted on a frame of the device.

8. A device according to one of claims 1 - 4, characterized by a third separate motor (601), which also is a local motor accompanying said heavy carriage (301) and cooperating with the positioning bar (302).

9. A device according to claim 8, characterized in that said motors (304, 206, 601) are controlled by a control device, which is arranged in such a way
that for a rapid displacement of the heavy carriage (301) all motors (304, 206, 601) are driven in such a way, that they all cooperate, i.e. in such a way that all motors during the large part of this step act on the heavy carriage with forces, which are directed in the same direction,
that the power required for a rapid displacement of the heavy carriage is delivered mainly by the second motor (206), and
that for the positioning of the heavy carriage (301) the motors are driven in such a way, that the second motor (206) is substantially inactive, while the first (304) and third motor (601) during the large part of this step will counteract each other, whereby possible play is eliminated.

10. A device according to one of claims 1 - 4, characterized in that the first motor is the movable part of a linear electric motor, which part is mounted on the heavy carriage (301), and that the positioning bar constitutes the stator of said linear motor.

11. A device according to one of claims 1 - 9, characterized in that the first motor (304) is a rotation motor and cooperates with a positioning bar through a first element (305), which is driven by said motor (304) and is rotatably mounted on the heavy carriage (301).

12. A device according to one of claims 1 - 9, characterized in that the positioning bar is a gear rack (303) and the first rotating element is a gear wheel (305).

13. A device according to one of claims 1 - 9, characterized in that the further means is a gear wheel (401), which cooperates with a gear rack (303) and is rotatably mounted on said heavy carriage (301).

14. A device according to one of claims 1 - 9, characterized in that the further means is a toothed belt (201), which is driven by a motor (206), which is attached to a frame, which supports the device.

15. A device according to one of claims 1 - 9, characterized in that the further means is a pneumatic cylinder, which is attached to a frame, which supports the device.

16. A device according to one of claims 1 - 9 or 15, characterized in that the further means is a pneumatic cylinder having a running seal.

17. A device according to one of claims 1 - 9 or 15, characterized in that the further means is a pneumatic cylinder having a magnetic coupling through the cylinder wall of the forces acting between the piston and the heavy carriage.

18. A device according to one of claims 1 - 17, characterized in that segments of the positioning bar (303) are only arranged in those areas of the path, where said heavy carriage (301) is to be positioned.

## Patentansprüche

1. Vorrichtung für eine schnelle Positionierung eines schweren Schlittens (301), der entlang einer Längsbahn (302) geführt wird, mit
einer stationären Positionierstange (303), die starr an einem Rahmen der Vorrichtung angebracht ist,
einem ersten Motor (304), der mit dieser zusammenarbeitet,
einer weiteren Einrichtung zur Verschiebung des schweren Schlittens, der durch einen zweiten Motor (206; 601) auf solche Weise angetrieben wird, daß die Kräfte, denen der schwere Schlitten (301) unterworfen wird, wenn der erste (304) und zweite Motor (206; 601) gleichzeitig aktiviert sind, in die gleiche Richtung geleitet werden können,
**dadurch gekennzeichnet,**
daß der erste Motor (304) ein örtlicher Motor ist, der mit dem schweren Schlitten (301) verbunden ist,
daß der zweite Motor (206; 601) ein separater Motor ist, und
daß die Vorrichtung auf solche Weise angeordnet ist, daß die Kräfte, denen der schwere Schlitten (301) unterworfen ist, wenn der erste (304) und zweite Motor (206; 601) gleichzeitig aktiviert sind, gegeneinander wirken können.

2. Vorrichtung nach Anspruch 1, **dadurch gekennzeichnet,** daß die Vorrichtung auf solche Weise angeordnet ist,
daß die Gesamtkraft, der der schwere Schlitten ( 3 01 ) unterworfen wird, wenn beide Motoren (301, 206; 601) aktiviert sind, aus einer ersten, verhältnismäßig kleinen Kraft und einer zweiten, verhältnismäßig großen Kraft besteht.
daß die erste Kraft auf den schweren Schlitten (301) über verhältnismäßig steife mechanische Elemente (303, 305) auf solche Weise wirkt, daß diese Kraft sehr schnell geändert werden kann, und
daß die zweite Kraft von dem zweiten Motor (206) abgeleitet wird und auf den schweren Schlitten über verhältnismäßig weichere oder elastischere mechanische Elemente (203, 201) wirkt,
wobei die Gesamtkraft eine beträchtliche Größe aufweist, die eine schnelle Verschiebung des schweren Schlittens (301) gestattet und auch in der Lage ist, sich schnell zu ändern, um eine Feinpositionierung des schweren Schlittens (301) zu gestatten.

3. Vorrichtung nach Anspruch 1 oder 2, **dadurch gekennzeichnet,** daß die Vorrichtung auf solche Weise angeordnet ist,
daß der schwere Schlitten (301) schnell und unpräzise durch den zweiten Motor (206) verschoben wird, und
daß die Feinpositionierung des schweren Schlittens (301) mittels des ersten Motors (304) ausgeführt wird zusammen mit einer gewissen Kraft, die durch die weitere Verschiebungseinrichtung vom zweiten Motor (206) erzielt wird.

4. Vorrichtung nach Anspruch 1 oder 2, **dadurch gekennzeichnet,** daß die Vorrichtung auf solche Weise Verschiebung des schweren Schlittens (301) erforderlich ist, hauptsächlich durch den zweiten Motor (206) abgegeben wird, und
daß die Feinpositionierung des schweren Schlittens (301) durch den ersten Motor (304) in Zusammenarbeit mit der großen Kraft ausgeführt wird, die von dem zweiten Motor (206) abgeleitet wird.

5. Vorrichtung nach einem der Ansprüche 1 bis 4, **dadurch gekennzeichnet,** daß die Motoren (304 und 206) von einer Steuervorrichtung gesteuert werden, die auf solche Weise angeordnet ist,
daß zur schnellen Verschiebung des schweren Schlittens (301) die Motoren (304 und 206) auf solche Weise angetrieben sind, daß beide Motoren während eines großen Teils dieser Stufe zusammenarbeiten, d.h., daß beide Motoren (304 und 206) auf den schweren Schlitten mit Kräften wirken, die in die gleiche Richtung gerichtet sind,
daß die Leistung, die zur schnellen Positionierung des schweren Schlittens (301) erforderlich ist, hauptsächlich vom zweiten Motor (206) abgeleitet wird, und
daß zur Positionierung des schweren Schlittens die Motoren (304 und 206) auf solche Weise angetrieben sind, daß sie während des großen Teils dieser Stufe gegeneinander wirken, wodurch ein mögliches Spiel eliminiert wird.

6. Vorrichtung nach einem der Ansprüche 1 bis 5, **dadurch gekennzeichnet,** daß der zweite Motor auch ein örtlicher Motor (601) ist, der mit dem schweren Schlitten (301) verbunden ist.

7. Vorrichtung nach einem der Ansprüche 1 bis 5, **dadurch gekennzeichnet,** daß der zweite Motor (601) starr auf einem Rahmen der Vorrichtung angebracht ist.

8. Vorrichtung nach einem der Ansprüche 1 bis 4, **gekennzeichnet durch** einen dritten separaten Motor (601), der ebenfalls ein örtlicher Motor ist, der mit dem schweren Schlitten (301) verbunden ist und mit der Positionierstange (302) zusammenarbeitet.

9. Vorrichtung nach Anspruch 8, **dadurch gekennzeichnet,** daß die Motoren (304, 206, 601) von einer Steuervorrichtung gesteuert sind, die auf solche Weise angeordnet ist,
daß zur schnellen Verschiebung des schweren Schlittens (301) alle Motoren (304, 206, 601) auf solche Weise angetrieben sind, daß sie alle zusammenarbeiten, d.h., auf solche Weise, daß alle Motoren während des großen Teils dieser Stufe auf den schweren Schlitten mit Kräften wirken, die in die gleiche Richtung gerichtet sind,
daß die Leistung, die zur schnellen Verschiebung des schweren Schlittens erforderlich ist, hauptsächlich vom zweiten Motor (206) abgegeben wird, und
daß zur Positionierung des schweren Schlittens (301) die Motoren auf solche Weise angetrieben sind, daß der zweite Motor (206) im wesentlichen inaktiv ist, während der erste (304) und dritte Motor (601) während des größten Teils dieser Stufe gegeneinander wirken, wodurch ein mögliches Spiel eliminiert wird.

10. Vorrichtung nach einem der Ansprüche 1 bis 4, **dadurch gekennzeichnet,** daß der erste Motor der bewegliche Teil eines elektrischen Linearmotors ist, wobei das Teil auf dem schweren Schlitten (301) angebracht ist, und daß die Positionierstange den Stator des Linearmotors bildet.

11. Vorrichtung nach einem der Ansprüche 1 bis 9, **dadurch gekennzeichnet,** daß der erste Motor ( 304 ) ein Rotationsmotor ist und mit einer Positionierstange über ein erstes Element (305) zusammenarbeitet, das vom Motor (304) angetrieben ist und drehbar auf dem schweren Schlitten (301) angebracht ist.

12. Vorrichtung nach einem der Ansprüche 1 bis 9, **dadurch gekennzeichnet,** daß die Positionierstange eine Zahnstange (303) und das erste rotierende Element ein Zahnrad (305) ist.

13. Vorrichtung nach einem der Ansprüche 1 bis 9, **dadurch gekennzeichnet,** daß die weitere Einrichtung ein Zahnrad (401) ist, das mit einer Zahnstange (303) zusammenarbeitet und drehbar auf dem schweren Schlitten (301) angebracht ist.

14. Vorrichtung nach einem der Ansprüche 1 bis 9, **dadurch gekennzeichnet,** daß die weitere Einrichtung ein Zahnriemen (201) ist, der von einem Motor (206) angetrieben ist, der an einem Rahmen angebracht ist, der die Vorrichtung trägt.

15. Vorrichtung nach einem der Ansprüche 1 bis 9, **dadurch gekennzeichnet,** daß die weitere Einrichtung ein Pneumatikzylinder ist, der an einem Rahmen angebracht ist, der die Vorrichtung trägt.

16. Vorrichtung nach einem der Ansprüche 1 bis 9 oder 15, **dadurch gekennzeichnet,** daß die weitere Einrichtung ein Pneumatikzylinder ist, der eine mitlaufende Dichtung aufweist.

17. Vorrichtung nach einem der Ansprüche 1 bis 9 oder 15, **dadurch gekennzeichnet,** daß die weitere Einrichtung ein Pneumatikzylinder ist, die eine Magnetkupplung aufweist, deren Kräfte durch die Zylinderwandung zwischen dem Kolben und dem schweren Schlitten wirken.

18. Vorrichtung nach einem der Ansprüche 1 bis 17, **dadurch gekennzeichnet,** daß Segmente der Positionierstange (303) nur in jenen Bereichen der Bahn angeordnet sind, in denen der schwere Schlitten (301) zu positionieren ist.

## Revendications

1. Dispositif de positionnement rapide d'un chariot lourd (301) qui est guidé le long d'une voie longitudinale (302), comprenant:
une barre stationnaire de positionnement (303) qui est fixée rigidement à un bâti du dispositif;
un premier moteur (304) coopérant avec ladite barre;
un autre moyen pour déplacer le chariot lourd, ce moyen étant entraîné par un second moteur (206,601) de manière que les forces auxquelles le chariot lourd (301) est soumis lorsque le premier moteur (304) et le second moteur (206,601) sont actionnés simultanément peuvent être dirigées dans la même direction;
caractérisé
en ce que le premier moteur (304) est un moteur local qui accompagne ledit chariot (301),
en ce que le second moteur (206,601) est un moteur séparé, et
en ce que le dispositif est agencé de manière que les forces auxquelles le chariot (301) est soumis lorsque le premier moteur (304) et le second moteur (206,601) sont activés simultanément peuvent se contrarier mutuellement.

2. Dispositif suivant la revendication 1, caractérisé en ce que le dispositif est agencé de telle sorte que:
la force totale, à laquelle est soumis le chariot (301), lorsque les deux moteurs (301 et 206;601) sont actionnés, est composée d'une première force, comparativement faible, et d'une seconde force, plus grande,
la première force agit sur le chariot (301) par l'intermédiaire d'éléments mécaniques comparativement rigides (303,305) de manière que cette force puisse varier très rapidement, et
la seconde force est dérivée du second moteur (206) et agit sur le chariot par l'intermédiaire d'éléments mécaniques comparativement plus faibles ou plus élastiques (203,201),
grâce à quoi la force totale a une grandeur considérable permettant un déplacement rapide du chariot (301) et est également apte à varier rapidement, permettant un positionnement fin du chariot (301).

3. Dispositif suivant la revendication 1 ou 2, caractérisé en ce qu'il est agencé de telle manière que:
le chariot (301) est déplacé rapidement et de façon grossière par le second moteur (206), et
le positionnement fin du chariot (301) est assuré au moyen du premier moteur (304), ensemble avec une certaine force obtenue, par l'intermédiaire de l'autre moyen de déplacement, à partir du second moteur (206).

4. Dispositif suivant la revendication 1 ou 2, caractérisé en ce qu'il est agencé de telle manière que:
l'énergie et la grande force nécessaires pour le déplacement rapide du chariot (301) sont fournies principalement par le second moteur (206), et
le positionnement fin du chariot (301) est assuré par le premier moteur (304) en coopération avec la grande force provenant du second moteur (206).

5. Dispositif suivant l'une des revendications 1 à 4, caractérisé en ce que les moteurs (304 et 206) sont commandés par un dispositif de commande qui est agencé de manière:
que, pour un déplacement rapide du chariot (301), les moteurs (304 et 206) sont entraînés de façon que les deux moteurs coopèrent pendant une grande partie de cette phase, c'est à dire que les deux moteurs (304 et 206) agissent sur le chariot avec des forces qui sont orientées dans la même direction,
que l'énergie nécessaire pour le positionnement rapide du chariot (301) est délivrée principalement par le second moteur (206), et
que, pour le positionnement du chariot,les moteurs (304 et 206) sont entraînés de façon que, pendant la grande partie de cette phase, ils se contrarient mutuellement, de sorte que tout jeu est supprimé.

6. Dispositif suivant l'une des revendications 1 à 5, caractérisé en ce que le second moteur est également un moteur local (601) qui accompagne le chariot (301).

7. Dispositif suivant l'une des revendications 1 à 5, caractérisé en ce que le second moteur (601) est monté rigidement sur un bâti du dispositif.

8. Dispositif suivant l'une des revendications 1 à 4, caractérisé en ce qu'il comprend un troisième moteur, séparé, (601), qui est également un moteur local accompagnant le chariot (301) et coopérant avec la barre de positionnement (302).

9. Dispositif suivant la revendication 8, caractérisé en ce que lesdits moteurs (304,206,601) sont commandés par un dispositif de commande qui est agencé de telle manière que:
pour un déplacement rapide du chariot (301), tous les moteurs (304,206,601) sont entraînés de façon qu'ils coopèrent tous, c'est à dire de façon que, pendant la grande partie de cette phase, tous les moteurs agissent sur le chariot avec des forces qui sont orientées dans la même direction,
l'énergie nécessaire pour un déplacement rapide du chariot provient principalement du second moteur (206), et
pour le positionnement du chariot (301) les moteurs sont entraînés de façon telle que le second moteur (206) est essentiellement inactif, tandis que le premier moteur (304) et le troisième moteur (601) se contrarient mutuellement durant la grande partie de cette phase, grâce à quoi tout jeu possible est supprimé.

10. Dispositif suivant l'une des revendications 1 à 4, caractérisé en ce que le premier moteur est l'organe mobile d'un moteur électrique linéaire, cet organe étant monté sur le chariot (301), et en ce que la barre de positionnement constitue le stator dudit moteur linéaire.

11. Dispositif suivant l'une des revendications 1 à 9, caractérisé en ce que le premier moteur (304) est un moteur rotatif et coopère avec une barre de positionnement par l'intermédiaire d'un premier élément (305), qui est entraîné par ledit moteur (304) et est monté rotatif sur le chariot (301).

12. Dispositif suivant l'une des revendications 1 à 9, caractérisé en ce que la barre de positionnement est une crémaillère (303) et le premier élément rotatif est un pignon (305).

13. Dispositif suivant l'une des revendications 1 à 9, caractérisé en ce que ledit autre moyen est un pignon (401), qui coopère avec une crémaillère (303) et est monté rotatif sur le chariot (301).

14. Dispositif suivant l'une des revendications 1 à 9, caractérisé en ce que ledit autre moyen est une courroie crantée (201), qui est entraînée par un moteur (206), qui est fixé sur un bâti qui soutient le dispositif.

15. Dispositif suivant l'une des revendications 1 à 9, caractérisé en ce que ledit autre moyen est un vérin pneumatique qui est fixé à un bâti qui soutient le dispositif.

16. Dispositif suivant l'une des revendications 1 à 9 ou 15, caractérisé en ce que ledit autre moyen est un vérin pneumatique comportant un joint roulant.

17. Dispositif suivant l'une des revendications 1 à 9 ou 15, caractérisé en ce que ledit moyen est un vérin pneumatique comportant, à travers la paroi du cylindre, un couplage magnétique des forces agissant entre le piston et le chariot.

18. Dispositif suivant l'une des revendications 1 à 17, caractérisé en ce que des segments de la barre de positionnement (303) sont disposés seulement dans celles des surfaces de la voie dans lesquelles le chariot (301) doit être positionné.
